(19) Europäisches Patentamt / European Patent Office / Office européen des brevets

(11) **EP 4 786 813 A1**

(12) **EUROPÄISCHE PATENTANMELDUNG**

(43) Veröffentlichungstag:
**05.08.2026 Patentblatt 2026/32**

(51) Internationale Patentklassifikation (IPC):
**F16D 3/38** *(2006.01)* **F16D 3/84** *(2006.01)*

(21) Anmeldenummer: **25227121.8**

(52) Gemeinsame Patentklassifikation (CPC):
**F16D 3/84; F16D 3/38; F16D 3/845**

(22) Anmeldetag: **23.12.2025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **30.01.2025 DE 202025100479 U**

(71) Anmelder: **Steiner GmbH & Co. KG**
**84375 Kirchdorf am Inn (DE)**

(72) Erfinder: **Steiner, Georg**
**84375 Kirchdorf am Inn (DE)**

(74) Vertreter: **Faul, Claus-Peter**
**Kanzlei Strasse & Faul**
**Stadtplatz 45**
**94474 Vilshofen (DE)**

(54) **SCHUTZVORRICHTUNG FÜR EIN KARDANGELENK**

(57) Schutzvorrichtung für ein Kardangelenk (28), insbesondere für den Einsatz in schmutz- und flüssigkeitsbelasteten Umgebungen. Die Schutzvorrichtung weist eine Mantelung (34) auf, die zumindest die beiden Gabeln (30.1, 30.2) und das Kreuzstück (32) des Kardangelenks umfangsseitig umgibt und dabei einen Hohlraum zwischen einer Innenmantelwand der Mantelung und der Außenkontur des Kardangelenks bildet. In diesen Hohlraum ist ein elastisches Material (22) einbringbar, das im eingebrachten Zustand den Hohlraum ausfüllt und dadurch eine Schutz- und Abdichtwirkung gegen Staub, Flüssigkeiten sowie abrasive Materialien bereitstellt und zugleich Schwingungen dämpfen kann. Das elastische Material kann beispielsweise durch eine Öffnung (38) in der Mantelung eingebracht und nach dem Befüllen verschlossen werden; alternativ können vorgefertigte Elastomerteile eingesetzt oder das Material eingepresst bzw. vergossen werden. Die Mantelung kann starr oder flexibel ausgeführt sein und in Ausführungsformen mit Winkelversatz oder Krümmung an die geometrischen Anforderungen angepasst werden.

**Fig. 4**

EP 4 786 813 A1

**Beschreibung**

Die Erfindung betrifft eine Schutzvorrichtung für ein Kardangelenk, die insbesondere in Verbindung mit Antriebs- und Fördersystemen eingesetzt wird. Solche Vorrichtungen dienen der Übertragung von Kräften und Bewegungen zwischen Wellen, die in der Regel fluchten, jedoch in bestimmten Betriebszuständen oder aufgrund von Toleranzen auch einen Versatz aufweisen können. Diese Vorrichtungen müssen hohen mechanischen Belastungen sowie Vibrationen, die vom Motor oder der Förderschnecke ausgehen, und äußeren Einflüssen standhalten. In der Praxis zeigen sich jedoch Schwächen bei der mechanischen Stabilität und beim Schutz der empfindlichen Bauteile vor äußeren Einwirkungen.

Im Rahmen der vorliegenden Erfindung wird auf bekannte technische Lösungen aufgebaut, um spezifische Schwächen zu beheben und neue Anforderungen zu erfüllen.

Im Folgenden wird das Bauteil mit dem Bezugszeichen 34 einheitlich als Mantelung bezeichnet; in der Prioritätsanmeldung wird hierfür auch der Begriff Kapselung bzw. Buchse oder Gehäuse verwendet. Entsprechend wird der zwischen der Mantelung 34 und dem Kardangelenk 28 ausgebildete Raum einheitlich als Hohlraum bezeichnet; der Begriff Zwischenraum kann hierfür gleichbedeutend verwendet werden. Das Füllmaterial mit dem Bezugszeichen 22 wird einheitlich als elastisches Material bezeichnet; in der Prioritätsanmeldung wird hierfür auch der Begriff elastische Masse verwendet.

Nach dem Stand der Technik ist beispielsweise die DE 202017101929 U1 des Anmelders bekannt. Diese beschreibt eine elastische Wellenkupplung und dient als Ausgangspunkt für die Weiterentwicklung der vorliegenden Erfindung. Zwar bietet die DE 20 2017 101 929 U1 grundlegende Lösungen für Schwingungsdämpfung sowie die Aufnahme von Radial- und Axialkräften, sie behebt jedoch spezifische Probleme nicht. Insbesondere fehlt ein wirksamer Schutz vor Staub, Flüssigkeiten und mechanischen Beschädigungen.

Bei herkömmlichen, offenen Kardanwellen treten zusätzlich folgende Herausforderungen auf: Wenn der Motor oder die Welle versehentlich oder aufgrund von Wartungsarbeiten rückwärts läuft, kann in der Schnecke befindliches Schüttgut das Kreuzgelenk zerstören.

Ein weiteres Problem ergibt sich bei der Beförderung von abrasiven, aggressiven Schüttgütern oder Stäuben, etwa Pellets, Asche und Ähnlichem. Der abrasive Staub dieser Materialien kann selbst massive metallische Bauteile beschädigen und zu erhöhtem Verschleiß führen.

Die vorliegende Weiterentwicklung zielt darauf ab, diese Probleme zu vermindern, indem sie einen verbesserten Schutz sowie eine erhöhte Belastbarkeit des Systems bereitstellt.

Darüber hinaus sind aus dem Stand der Technik Schutzvorrichtungen für Kardanwellenkupplungen, wie beispielsweise die DE 1575978 C und die DE 1750129 A, bekannt:

Die DE 1575978 C beschreibt eine Schutzvorrichtung, die aus einer starren Hülse und einer Kunststoffbüchse besteht. Diese Komponenten sind durch eine Flansch-Nut-Verbindung sowie einen Klemmring gesichert. Zwar gewährleistet diese Konstruktion einen grundlegenden mechanischen Schutz, sie löst jedoch nicht die Herausforderungen eines umfassenden Schutzes vor Staub, Flüssigkeiten, abrasiven und aggressiven Materialien, noch bietet sie die Möglichkeit Vibrationen zu dämpfen.

Die DE 1750129 A befasst sich mit einer Schutzvorrichtung für Kardan- oder Kugelgelenke, die aus zwei Kalotten mit einem dazwischenliegenden Kugelsegment besteht. Diese Konstruktion ermöglicht den Schutz des Gelenks auch bei größeren Winkelbewegungen der Wellen. Jedoch bietet sie keinen Schutz vor Staub, Flüssigkeiten oder abrasiven und aggressiven Materialien und erlaubt weder den Ausgleich von radialen und axialen Kräften noch die Dämpfung von Schwingungen.

Aus der DE 32 48 255 A1 ist ein Ausgleichsgelenk für Lenkspindeln von Kraftfahrzeugen bekannt. Ein Zapfenkreuz weist dort vier Zapfen auf, die jeweils in Lagerbohrungen angeordnet sind und von gummielastischen Hülsen umgeben werden, welche Relativbewegungen zwischen Zapfen und Lagerbohrungen elastisch aufnehmen. Die gummielastischen Hülsen sind ausschließlich den Zapfenbereichen zugeordnet; das übrige Ausgleichsgelenk bleibt offen und ist nicht von einer Mantelung umschlossen.

Die DD 201 823 A5 beschreibt eine geschlossene radiale Kardankupplung für Exzenterschneckenpumpen. Ein Exzenterwellenstumpf ist dort über ein Kardanelement mit einer Antriebswelle gekoppelt und von einem zylindrischen Kopfteil umschlossen, das als Mantelung fungiert. Der von dem Kopfteil eingeschlossene Raum ist mit einem Schmiermittel gefüllt, dessen Konsistenz nicht näher beschrieben ist. Aufgrund der in D2 dargestellten Dichtungsanordnung mit innerem und äußerem Dichtring und einem kugelförmigen Segmentelement ist für den Fachmann erkennbar, dass ein flüssiges oder pastöses Schmiermittel am Austreten gehindert werden soll.

Aus der DE 16 75 224 B2 ist eine Schutzumhüllung für Kardangelenke bekannt. Kalottenförmige Ringe wirken dort mit Kalotten an den Wellenenden zusammen und schließen das Kardangelenk sphärisch ein, um es abzudecken und vor Berührung zu schützen. Über eine Füllung des von den Kalotten und Ringen eingeschlossenen Hohlraums mit einem Füllmaterial ist in dieser Schrift nichts ausgesagt.

Keines der zitierten Dokumente offenbart eine Schutzvorrichtung nach Anspruch 1.

Die vorliegende Erfindung setzt an den Schwächen des bekannten Standes der Technik an und bietet eine Lösung, die sowohl einen verbesserten Schutz vor äußeren Einflüssen wie Staub, Flüssigkeiten sowie abrasiven und aggressiven Materialien als auch wesentliche mechanische Verbesserungen umfasst. Insbesondere ermöglicht sie die Dämpfung von Schwingungen, den Ausgleich geringer radialer Versätze, die Korrektur von Winkelversätzen, die Aufnahme hoher Axialkräfte und die Reduktion von Belastungen.

**Aufgabe der Erfindung**

Ausgehend von diesem Stand der Technik liegt der Erfindung die Aufgabe zugrunde, eine Schutzvorrichtung für ein Kardangelenk bereitzustellen, die sich insbesondere für den Einsatz in schmutz- und flüssigkeitsbelasteten Umgebungen eignet und den Bereich des Kardangelenks gegenüber äußeren Einflüssen wie Staub, Flüssigkeiten sowie abrasiven und aggressiven Materialien besser schützt, wobei die Schutzvorrichtung auch unter betriebsüblichen mechanischen Belastungen und Vibrationen funktionsfähig bleibt und die für den Betrieb erforderliche Beweglichkeit des Kardangelenks sowie die Aufnahme eines geringen Winkelversatzes zwischen den gekoppelten Wellen erhalten bleiben.

**Lösung der Aufgabe**

Diese Aufgabe wird durch eine Schutzvorrichtung mit den Merkmalen des Anspruchs 1 gelöst. Die Schutzvorrichtung weist eine das Kardangelenk 28 umgebende Mantelung 34 auf, wobei ein zwischen einer Innenfläche der Mantelung 34 und der Außenkontur des Kardangelenks 28 ausgebildeter Zwischenraum mit einem elastischen Material 22 ausgefüllt ist, so dass das Kardangelenk 28 von dem elastischen Material 22 umgeben ist. Hierdurch kann der Bereich des Kardangelenks 28 gegenüber äußeren Einflüssen wie Staub, Flüssigkeiten sowie abrasiven und aggressiven Materialien abgeschirmt werden.
In einer bevorzugten Ausführungsform kann das Kardangelenk 28 vollständig von der Mantelung 34 umgeben sein und der Zwischenraum vollständig mit dem elastischen Material 22 ausgefüllt sein, sodass das Kardangelenk 28 vollständig vom elastischen Material 22 umschlossen ist. Vorteilhafte Ausgestaltungen der Erfindung sind in den Unteransprüchen beschrieben.
"Vollständig" bedeutet im Sinne dieser Anmeldung eine für den vorgesehenen Schutzzweck ausreichende Abdeckung bzw. Ausfüllung ohne relevanten Durchtrittspfad.

**Vorteile und Wirkungen**

In Ausführungsformen, in denen die Mantelung 34 gebogen ausgebildet ist und/oder ein Spalt zwischen der Mantelung 34 und einem Antriebsflansch vorgesehen ist, kann die Schutzvorrichtung dazu beitragen, einen geringen Winkelversatz zwischen der Antriebswelle 16 und der Förderschneckenwelle 14 aufzunehmen, ohne die Funktion des Kardangelenks 28 wesentlich zu beeinträchtigen.
Das im Zwischenraum angeordnete elastische Material 22 kann darüber hinaus Schwingungen vermindern und Belastungsspitzen, insbesondere im Bereich von Axial- und Radialkräften, abmildern, so dass die mechanische Beanspruchung der Bauteile des Kardangelenks 28 reduziert werden kann.
Die genaue technische Ausgestaltung der Lösung ergibt sich aus Anspruch 1. Die Unteransprüche offenbaren bevorzugte Weiterentwicklungen und Ausführungsformen der Erfindung.
Die nachstehende Beschreibung erläutert die Erfindung anhand von einem Ausführungsbeispiel, das in den beigefügten Zeichnungen dargestellt ist. Dieses dient der Veranschaulichung der Erfindung und soll die wesentlichen Merkmale und Vorteile erläutern. Der Schutzbereich der Ansprüche wird dadurch jedoch nicht eingeschränkt.
Die Erfindung betrifft eine Schutzvorrichtung für ein Kardangelenk, die speziell für den Einsatz in Fördersystemen entwickelt wurde. Sie ist jedoch nicht auf diesen Anwendungsbereich beschränkt und kann überall dort eingesetzt werden, wo Bewegungen mit Versatz zwischen Antriebs- und Abtriebswellen zuverlässig übertragen werden müssen. Ziel ist es, die mechanische Verbindung so zu gestalten, dass sowohl Flexibilität als auch ein wirksamer Schutz vor äußeren Einflüssen, wie Staub, Flüssigkeiten und abrasiven und aggressiven Materialien, gewährleistet werden. Dabei wird besonders Wert auf eine robuste und anpassungsfähige Konstruktion gelegt, die sich durch hohe Belastbarkeit und vielseitige Einsatzmöglichkeiten auszeichnet.
Die Fördertechnik umfasst den Transport einer Vielzahl von Materialien, die je nach Anwendung und Betriebsbedingungen unterschiedliche Anforderungen an die Technik stellen. Dazu gehören unter anderem Pellets, insbesondere Holzpellets, Holzstücke, Biomasse, Lebensmittel, Asche, Pulver, Granulate, Kunststoffe (insbesondere im Recyclingbereich), Glas sowie Gummi. Diese Aufzählung ist nicht abschließend, da in der Praxis weitere Stoffe verarbeitet werden, die spezielle technische Lösungen erfordern.
Durch die Materialeigenschaften entstehen beim Transport Herausforderungen:
Beim Transport der genannten Materialien treten häufig spezifische Probleme auf, die durch ihre abrasiven und aggressiven Eigenschaften, das Auftreten von Staub und Flüssigkeiten sowie durch betriebsbedingte Belastungen entstehen. Abrasive Materialien wie Sand, Glasgranulate, Kunststoffabfälle oder holzbasierte Schüttgüter verursachen starke mechanische Beanspruchungen an der Fördertechnik, insbesondere an beweglichen Teilen wie Wellenkupplungen.
Staub, der bei trockenen Materialien wie Pulver, Biomasse oder Pellets entsteht, dringt in empfindliche Bauteile ein und führt zu Funktionsstörungen, Blockaden oder sogar Korrosion. Flüssigkeiten, die etwa in der Lebensmittelverarbeitung oder bei chemischen Anwendungen auftreten, greifen die Bauteile an und verkürzen deren Lebensdauer erheblich.

Zusätzliche Belastungen entstehen in der Recyclingtechnik, da Materialien wie Kunststoffe, Gummi oder ähnliche Stoffe oft mit Fremdstoffen wie Sand oder Erde vermischt sind. Dies führt zu weiterem Verschleiß durch Abrieb, insbesondere in stark beanspruchten Bereichen wie Kupplungen und Dichtungen.

Ein weiteres Risiko ergibt sich aus Bedienungsfehlern oder Wartungsarbeiten, insbesondere wenn der Motor oder die Antriebswelle versehentlich oder gezielt rückwärtsläuft. In einem solchen Fall wird auch eventuell in der Schnecke verbliebenes Schüttgut rückwärts gefördert und kann in mechanische Komponenten wie Kreuzgelenke oder Antriebseinheiten gelangen, was zu schwerwiegenden Schäden bis hin zur vollständigen Zerstörung der Antriebseinheit führen kann.

Herkömmliche Ansätze zum Schutz von Wellenkupplungen konzentrieren sich häufig auf die Verwendung von Kapselungen, beispielsweise in Form von Buchsen oder Kalotten, wie eingangs beschrieben. Diese Konstruktionen bieten eine grundlegende Barriere gegen äußere Einflüsse wie Staub und Flüssigkeiten, doch ihre Wirksamkeit ist in der Praxis häufig begrenzt. Feiner Staub kann dennoch in die empfindlichen Bereiche der Kupplung eindringen, insbesondere bei nicht vollständig dichten Konstruktionen. Ebenso können aggressive Flüssigkeiten, wie sie etwa in der chemischen Industrie oder Lebensmittelverarbeitung auftreten, die Lebensdauer solcher Schutzmechanismen beeinträchtigen.

Ein weiteres Problem herkömmlicher Kapselungen ist ihre mangelnde Flexibilität. Sie sind oft nur eingeschränkt in der Lage, radialen, axialen oder Winkelversatz auszugleichen, der durch Montageungenauigkeiten oder betriebsbedingte Bewegungen entsteht. Diese Unzulänglichkeiten führen zu einem erhöhten Verschleiß und einer eingeschränkten Belastbarkeit der Kupplung, was wiederum die Zuverlässigkeit und Lebensdauer der gesamten Fördertechnik negativ beeinflusst.

Nach den Feststellungen des Erfinders haben bestehende Konstruktionen daher oft mit einem grundlegenden Zielkonflikt zu kämpfen: Sie können entweder Schutz vor äußeren Einflüssen oder eine ausreichende Flexibilität bieten, jedoch nicht beides gleichzeitig in zufriedenstellender Weise. Darüber hinaus erweisen sich viele dieser Lösungen als anfällig gegenüber den spezifischen Herausforderungen in der Fördertechnik, insbesondere bei abrasiven Materialien und hochbelasteten Anwendungen.

Ein weiterer Ansatz, der in der Technik bekannt ist, besteht in der Verwendung von Füllschichten oder elastischen Materialien innerhalb der Kupplung. Solche Konstruktionen bieten zusätzliche Abdichtung und dämpfen in gewissem Umfang Schwingungen. In der Praxis zeigen sich jedoch auch hier Schwächen, insbesondere in Bezug auf die Langzeitstabilität der Materialien, die Materialabnutzung und die Fähigkeit, äußere Einflüsse vollständig zu verhindern.

Die vorliegende Erfindung greift die Schwächen herkömmlicher Lösungen auf und zielt darauf ab, den Schutz der Kupplungselemente vor äußeren Einflüssen wie Staub, Flüssigkeiten und abrasiven Materialien zu verbessern und dabei die erforderliche Flexibilität und Belastbarkeit der Konstruktion zu ermöglichen. Ziel ist es, eine Schutzvorrichtung bereitzustellen, die eine Beständigkeit gegen äußere Einflüsse mit einer zuverlässigen Funktion der Kupplung verbindet und sich an unterschiedliche Anwendungen anpassen lässt.

Hierzu werden ein elastisches Zwischenelement und eine Schutzhülle so kombiniert, dass eine robuste und langlebige Konstruktion entsteht, die den Anforderungen vielseitiger Einsatzbereiche gerecht wird.

Die Erfindung ist nachstehend an einem Ausführungsbeispiel erläutert, das in der Zeichnung dargestellt ist. Es zeigen:

Figur 1 zeigt eine fertig montierte Wellenkupplung 10 in der Gesamtansicht,
Figur 2 zeigt die Wellenkupplung der Figur 1 mit geöffneter Mantelung 34,
Figur 3 zeigt eine Explosionsdarstellung der Wellenkupplung 10, in der die einzelnen Bauteile und ihre Verbindungen zueinander schematisch dargestellt sind,
Figur 4 zeigt eine Detailansicht des mehrteiligen Kardangelenks 28 mit elastischem Material 22 und Mantelung 34.

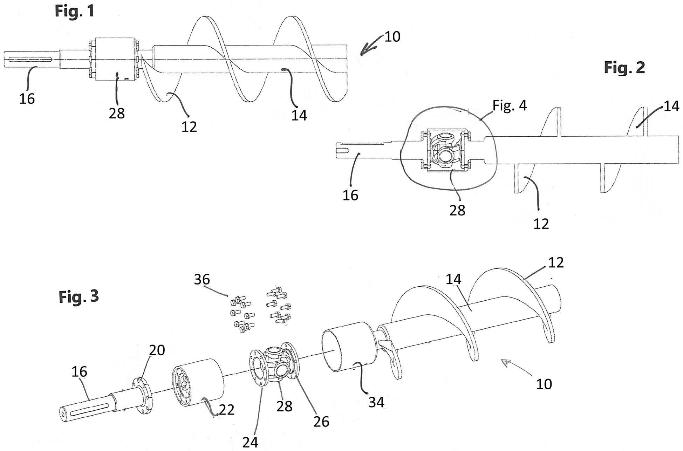

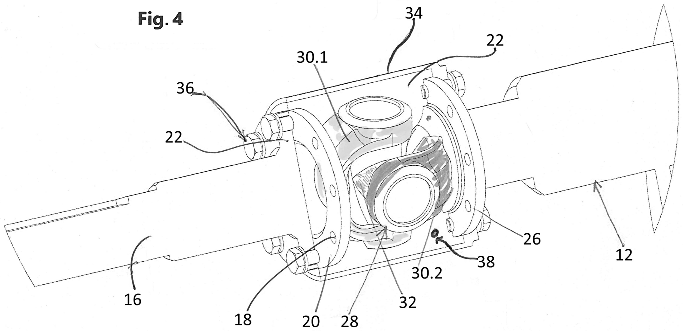

Figur 1 zeigt ein Anwendungsbeispiel einer Wellenkupplung 10 gemäß der Erfindung in der Gesamtansicht. Die Darstellung veranschaulicht den Einsatz der Wellenkupplung 10 in Verbindung mit einer Förderschnecke 12. Eine Welle 14 der Förderschnecke ist dabei über ein Kardangelenk 28, das von einer Mantelung 34 umgeben ist und in Figur 4 näher dargestellt wird, mit einer Antriebswelle 16 eines nicht näher dargestellten Motors verbunden.

Figur 2 zeigt eine fertig montierte Wellenkupplung 10 mit geöffneter Mantelung 34. Diese Darstellung ermöglicht einen Einblick in die innere Struktur eines Kardangelenks 28 und die Anordnung der Verbindungselemente. Die Welle 14 der Förderschnecke 12 und eine Antriebswelle 16 des Motors sind über das Kardangelenk 28 verbunden, das durch die Mantelung 34 vor äußeren Einflüssen geschützt wird. Diese Konstruktion gewährleistet nicht nur die mechanische Übertragung von Kräften, sondern bietet gleichzeitig Schutz vor Staub, Flüssigkeiten und abrasiven Materialien.

**Figur 3** zeigt eine Explosionsdarstellung der Wellenkupplung 10, in der die einzelnen Bauteile und deren Verbindungen zueinander schematisch dargestellt sind. Diese Darstellung verdeutlicht die Anordnung und Funktion der Komponenten, insbesondere die Kopplung zwischen Antriebs- und Abtriebsseite durch das Kardangelenk 28.

Zunächst ist die Antriebswelle 16 mit einem Antriebsflansch 20 verbunden. Der Antriebsflansch 20 ist mittels Befestigungselementen 36 mit dem Abtriebsflansch 24 des Kardangelenks 28 gekoppelt. Das Kardangelenk 28 bildet die zentrale Komponente der Wellenkupplung 10, da es die Relativbewegungen zwischen den Wellen ausgleicht. Es ist über den Kardanflansch 26 und die Befestigungselemente 36 fest mit der Förderschneckenwelle 14 verbunden.

Wie zuvor beschrieben, ist im dargestellten Ausführungsbeispiel eine Mantelung 34 vorgesehen, die das Kardangelenk 28 umfangsseitig umgibt und zumindest im Bereich der Gabeln 30.1, 30.2 sowie des Kreuzstücks 32 eine äußere Abschirmung bildet. Die Mantelung 34 kann beispielsweise fest mit der Förderschneckenwelle 14 verbunden sein, etwa durch eine verschweißte Konstruktion; alternativ kann die Verbindung auch durch eine Verschraubung erfolgen. Hierdurch kann der Bereich des Kardangelenks 28 gegenüber dem Eindringen von Staub, Flüssigkeiten und abrasiven Materialien abgeschirmt werden. In einer bevorzugten Ausführungsform kann das Kardangelenk 28 vollständig von der Mantelung 34 umgeben sein, sodass eine vollständige Abdeckung des Kardangelenkbereichs erreicht werden kann.

Darüber hinaus ist das Kardangelenk 28 im Hohlraum der Mantelung 34 von einem elastischen Material 22 umgeben, das vorzugsweise als Silikon-Elastomerfüllung ausgebildet ist. Das elastische Material 22 übernimmt neben der Abdichtungswirkung eine Dämpfungswirkung für Vibrationen und trägt dazu bei, die beweglichen Teile des Kardangelenks 28 vor mechanischer Beanspruchung und äußeren Einflüssen zu schützen. Zum Einbringen des elastischen Materials 22 kann die Mantelung 34 eine Öffnung 38 aufweisen, die mittels einer Verschlusseinrichtung verschließbar ist. In einer bevorzugten Ausführungsform kann das elastische Material 22 den Hohlraum vollständig ausfüllen, sich an die Geometrien der umgebenden Bauteile anpassen und anschließend aushärten, sodass das Kardangelenk 28 vollständig von dem elastischen Material 22 umgeben ist und eine dauerhafte Abdichtung sowie ein umfassender Schutz vor äußeren Einflüssen wie Staub, Flüssigkeiten und abrasiven Materialien erreicht werden können.

In einer alternativen Ausführungsform zur zuvor beschriebenen starren, einseitigen Verbindung der Mantelung 34 mit der Förderschneckenwelle 14 kann die Mantelung 34 unabhängig von der Förderschneckenwelle 14 ausgeführt sein. Statt einer direkten Verbindung kann die Mantelung 34 an einer anderen stabilen Komponente der Konstruktion fixiert werden, beispielsweise mittels Schraubverbindungen, Klemmvorrichtungen oder elastischer Lagerungen.

Diese alternative Gestaltung bietet den Vorteil einer höheren Flexibilität bei der Montage und erleichtert zugleich die Wartung, ohne die Schutzfunktion der Mantelung 34 wesentlich zu beeinträchtigen. Darüber hinaus gewährleistet sie, dass die Mantelung 34 auch bei variierenden Betriebsanforderungen zuverlässig schützt. Ebenso ist eine Konstruktion denkbar, bei der die Mantelung 34 ohne starre Verbindung zur Antriebsseite und/oder zur Abtriebsseite ausgeführt ist, wodurch zusätzliche Freiheitsgrade geschaffen werden können; die Mantelung 34 kann hierbei im eingebrachten Zustand durch das elastische Material 22 in einer definierten Lage relativ zum Kardangelenk 28 gehalten sein.

Das elastische Material 22 füllt den innerhalb der Mantelung 34 ausgebildeten Hohlraum im Wesentlichen aus und trägt dazu bei, das Kardangelenk 28 gegenüber dem Eindringen von Staub, Flüssigkeiten und abrasiven Materialien abzuschirmen. Gleichzeitig kann das elastische Material 22 mechanische Vibrationen aufnehmen und so die Belastung der Kupplungselemente reduzieren. Aufgrund seiner chemischen und thermischen Beständigkeit behält das elastische Material 22 seine Schutz- und Dämpfungseigenschaften auch unter anspruchsvollen Betriebsbedingungen, beispielsweise bei erhöhten Temperaturen oder beim Kontakt mit aggressiven Medien. Auf diese Weise wird ein wirksamer Schutz des Kardangelenks 28 erreicht, wobei die für den Betrieb erforderliche Beweglichkeit des Gelenks erhalten bleibt.

Das elastische Material 22 füllt den zwischen der Innenfläche der Mantelung 34 und der Außenkontur des Kardangelenks 28 vorhandenen Zwischenraum im Wesentlichen aus und schützt das Kardangelenk 28 vor dem Eindringen von Staub, Flüssigkeiten und abrasiven Materialien. Gleichzeitig kann das elastische Material 22 mechanische Vibrationen absorbieren und so die Belastung der Kupplungselemente reduzieren. Dank seiner chemischen und thermischen Beständigkeit behält das elastische Material 22 seine Schutz- und Dämpfungsfunktion auch unter anspruchsvollen Bedingungen, wie beispielsweise bei hohen Temperaturen oder beim Kontakt mit aggressiven Medien.

In Kombination mit der Mantelung 34 wirkt das elastische Material 22 ergänzend zur Schutzfunktion der Mantelung 34. Während die Mantelung 34 als äußere Barriere gegenüber äußeren Einflüssen dient, trägt das elastische Material 22 zur Abdichtung des Hohlraums bei und kann das Kardangelenk 28 gegenüber mechanischen Belastungen sowie gegenüber dem Eindringen von Partikeln oder Medien abschirmen. Hierdurch kann eine zuverlässige Funktion des Kardangelenks 28 auch unter erhöhten Belastungen durch Staub, Feuchtigkeit oder aggressive Medien unterstützt werden.

Elastomere sind formfeste, aber elastisch verformbare Kunststoffe, die nach einer Belastung in ihre ursprüngliche Gestalt zurückkehren. Sie zeichnen sich insbesondere dadurch aus, dass sie unter Krafteinwirkung stark verformt werden können und nach der Entlastung ihre ursprüngliche Form wieder annehmen. Zu den wesentlichen Eigenschaften von Elastomeren zählen ihre hohe Flexibilität, die sich durch Dehnbarkeit und Elastizität auszeichnet, ihre Beständigkeit gegenüber Verschleiß, Hitze und chemischen Einflüssen sowie ihre hervorragenden Dämpfungseigenschaften, die Schwingungen und Stöße effektiv absorbieren.

Beispiele für Elastomere sind Styrol-Butadien-Kautschuk (SBR), Nitrilkautschuk (NBR), Chloroprenkautschuk (CR), Fluor-Polymer-Kautschuk (FKM), Butadien-Kautschuk (BR) und Ethylen-Propylen-Dien-Kautschuk (EPDM). Silikon-Elastomere heben sich von anderen Elastomeren durch ihre chemische Struktur ab, da sie keine rein organischen Verbindungen enthalten. Diese Eigenschaft verleiht ihnen eine außergewöhnlich hohe chemische und thermische Beständigkeit. Selbst bei hohen oder stark schwankenden Temperaturen bleiben sie flexibel und widerstandsfähig, was sie für Anwendungen mit aggressiven Medien oder thermischer Belastung besonders geeignet macht

Figur 4 zeigt eine Detailansicht des mehrteiligen Kardangelenks 28 mit elastischem Material 22 und Mantelung 34. Im Gegensatz zu Figur 3, die die Vorrichtung in einer Explosionsdarstellung zeigt, veranschaulicht Figur 4 die Konstruktion im zusammengebauten Zustand.

Das Kardangelenk 28 besteht aus Gabeln 30.1 und 30.2, die über ein zentrales Kreuzstück 32 gelenkig miteinander verbunden sind. An beiden Seiten des Kardangelenks 28 sind die Gabeln 30.1 / 30.2 mit Anschlussteilen versehen, über die eine Verbindung zu den Flanschen 24 und 26 hergestellt ist. Die Flansche 24, 26 dienen dazu, die beweglichen Teile des Kardangelenks 28 mit den angrenzenden Komponenten des Antriebsstrangs zu verbinden. Die Mantelung 34 umgibt das Kardangelenk 28 unter Bildung eines Hohlraums zwischen ihrer Innenwand und der Außenkontur des Kardangelenks 28, wobei dieser Hohlraum mit dem elastischen Material 22 befüllbar ist und im befüllten Zustand zumindest im Wesentlichen ausgefüllt ist.

Das Kardangelenk 28 ist einerseits über den Flansch 24 mit dem Antriebsflansch 20 verbunden, der an der Antriebswelle 16 befestigt ist, und andererseits über den Flansch 26 mit der Mantelung 34 gekoppelt. Die Befestigungselemente 36 sichern den Antriebsflansch 20 sowie den Flansch 26 in den zugehörigen Gewindebohrungen 18 der Flansche 24 und 26.

Im geschlossenen Zustand wird das elastische Material 22 durch eine Öffnung 38 in die Mantelung 34 eingebracht. Das elastische Material 22 füllt den Hohlraum im Wesentlichen aus, passt sich an die Geometrien der umgebenden Bauteile an und kann anschließend aushärten. Auf diese Weise wird das Kardangelenk 28 von dem elastischen Material 22 umgeben, wodurch eine Abdichtung sowie ein Schutz vor äußeren Einflüssen, wie Staub, Flüssigkeiten und abrasiven Materialien, erreicht wird. Nach dem Befüllen kann die Öffnung 38 durch eine Verschlusseinrichtung verschlossen werden.
In einer bevorzugten Ausführungsform füllt das elastische Material 22 den Hohlraum vollständig aus, passt sich präzise an die Geometrien der Bauteile an und härtet anschließend aus, sodass das Kardangelenk 28 vollständig von dem elastischen Material 22 umgeben ist, was eine dauerhafte Abdichtung und einen umfassenden Schutz vor äußeren Einflüssen wie Staub, Flüssigkeiten und abrasiven Materialien gewährleistet.

Zwischen der Mantelung 34 und dem Antriebsflansch 20 kann ein definierter Spalt vorgesehen sein. Über diesen Spalt kann ein geringer Winkelversatz zwischen der Antriebswelle 16 und der Förderschneckenwelle 14 aufgenommen werden. Der maximal aufnehmbare Winkelversatz hängt dabei von der Breite des Spalts sowie von der Baulänge der Kupplung ab.

Beispielsweise kann ein Spalt von etwa 5 mm bei einer typischen Baulänge der Kupplung von 300 mm die Aufnahme eines Winkelversatzes von etwa 1° ermöglichen. Der Winkelversatz $\alpha$ hängt hierbei näherungsweise von der Spaltbreite s und der Länge L der relevanten Bauteile ab, wobei für kleine Winkel gilt:

$$\tan(\alpha) \approx s / L$$

Durch diese Ausgestaltung können Zwangsverspannungen innerhalb der Kupplung reduziert und eine gleichmäßige Übertragung der Drehbewegung unterstützt werden.

Neben dem Einspritzen des elastischen Materials 22 durch die Öffnung 38 können auch alternative Verfahren zum Einbringen des elastischen Materials 22 verwendet werden:

- Einbringen vorgefertigter Elastomerteile:
  Das elastische Material 22 kann im geöffneten Zustand der Mantelung 34 eingebracht werden, indem vorgefertigte Elastomerteile, wie beispielsweise Elastomerringe, in den Hohlraum eingeschoben werden. Eine technische Alternative bilden zwei Elastomer-Halbschalen. Ebenso können Platten oder Blöcke verwendet werden. Nach dem Einbringen passen sich die Elastomerteile an die Geometrien der umgebenden Bauteile an und können zu einer weitgehend dichten Ausfüllung des Hohlraums beitragen. Dieses Verfahren erfordert kein spezielles Einspritzsystem und ermöglicht eine einfache und kosteneffiziente Handhabung.

- Manuelles Einpressen des elastischen Materials:
  Eine weitere Möglichkeit besteht im manuellen Einpressen des elastischen Materials 22 mithilfe einer Fettpresse, beispielsweise einer Silikonpresse, oder eines ähnlichen Geräts. Dieses Verfahren bietet insbesondere bei Wartungsarbeiten oder Reparaturen Vorteile, da es flexibel und gezielt eingesetzt werden kann.

- Vergießen des elastischen Materials:
  Das elastische Material 22 kann vor dem endgültigen Schließen der Mantelung 34 in flüssiger oder halbflüssiger Form in den Hohlraum eingebracht werden. Dabei verteilt sich das Material durch Schwerkraft und härtet anschließend aus. Dieses Verfahren eignet sich insbesondere für Konstruktionen, bei denen die Geometrie der Bauteile eine gleichmäßige Verteilung des Materials begünstigt.

**Alternative Ausführung für Systeme mit Winkel oder Krümmung**

Wenn die Konstruktion eine Krümmung oder einen Winkel aufweist, erfordert dies eine entsprechend angepasste Mantelung 34. Geeignete Ausführungen umfassen elastisch verformbare Materialien, beispielsweise Gummi, sowie flexible Ausführungen, etwa in Form von Gummi- oder Gewebeschläuchen.

Die Mantelung 34 kann so gestaltet sein, dass sie einen definierten Winkelversatz zwischen den verbundenen Wellen aufnehmen kann. Ein solcher Winkelversatz liegt vorzugsweise bei bis zu 5°, kann jedoch in Ausnahmefällen bis zu 10° und in besonderen Anwendungen bis zu 20° betragen, um auch Anwendungen mit nicht fluchtenden Wellen zu ermöglichen. Die praktische Realisierbarkeit größerer Winkelversätze hängt dabei von der konstruktiven Ausgestaltung der Mantelung 34, den Eigenschaften des elastischen Materials 22 sowie den konkreten Einsatzbedingungen ab; in vielen Anwendungen liegen die vorgesehenen Winkelversätze im Bereich von bis zu etwa 5°, da größere Winkelversätze eine entsprechend angepasste Auslegung erfordern und nicht für alle Anwendungen gleichermaßen geeignet sind. Auch in dieser Ausführungsform kann das elastische Material 22 eine abdichtende Wirkung entfalten und die beweglichen Teile schützen.

Da das elastische Material 22 bei dieser Ausführung gleichzeitig Druck- und Dehnungsbelastungen ausgesetzt ist, kann der Einsatz von hochelastischen Elastomeren vorteilhaft sein. Derartige Materialien zeichnen sich durch eine hohe Flexibilität und Belastbarkeit aus, sodass wiederholte Verformungen infolge von Bewegungen und Vibrationen ohne vorzeitige Materialermüdung aufgenommen werden können. Diese alternative Ausführungsform ist in den Figuren nicht dargestellt.

**Bezugszeichenliste**

10 Wellenkupplung
12 Förderschnecke
14 Förderschneckenwelle
16 Antriebswelle
18 Gewindebohrung
20 Antriebsflansch
22 elastisches Material
24 Abtriebsflansch

26 Kardanflansch
28 Kardangelenk
30.1 erste Gabel
30.2 zweite Gabel
32 Kreuzstück
34 Mantelung
36 Schraube / Befestigungselement
38 Öffnung

**Patentansprüche**

1.   Schutzvorrichtung für ein Kardangelenk (28), wobei das Kardangelenk (28) eine erste Gabel (30.1) und eine zweite Gabel (30.2) aufweist, die über ein Kreuzstück (32) gelenkig verbunden sind, aufweisend eine Mantelung (34), die ausgebildet ist, zumindest die erste Gabel (30.1), die zweite Gabel (30.2) und das Kreuzstück (32) des Kardangelenks (28) umfangsseitig unter Bildung eines Hohlraums zwischen einer Innenmantelwand der Mantelung (34) und einer Außenkontur des Kardangelenks (28) zu umgeben, **dadurch gekennzeichnet, dass** ein elastisches Material (22) in den Hohlraum einbringbar ist, wobei das elastische Material (22) im eingefügten Zustand den Hohlraum ausfüllt."

2.   Schutzvorrichtung nach Anspruch 1, **dadurch gekennzeichnet, dass** die Mantelung (34) eine Öffnung (38) zum Einbringen des elastischen Materials (22) in den Hohlraum aufweist und eine Verschlusseinrichtung vorgesehen ist, mit welcher die Öffnung (38) verschließbar ist.

3.   Schutzvorrichtung nach Anspruch 1, **dadurch gekennzeichnet, dass** das elastische Material (22) aus vorgefertigten Teilen besteht, die als Ring, Platte oder Block ausgebildet sind und im eingebrachten Zustand den Hohlraum ausfüllen.

4.   Schutzvorrichtung nach Anspruch 2, **dadurch gekennzeichnet, dass** die Öffnung (38) zum Einbringen des elastischen Materials (22) mittels einer Fettpresse oder eines ähnlichen Geräts ausgebildet ist.

5.   Schutzvorrichtung nach einem der Ansprüche 1 bis 4, **dadurch gekennzeichnet, dass** die Mantelung (34) gemeinsam mit dem elastischen Material (22) im eingebrachten Zustand den Hohlraum im Bereich des Kardangelenks (28) abdichtet.

6.   Schutzvorrichtung nach einem der vorhergehenden Ansprüche, **dadurch gekennzeichnet, dass** die Mantelung (34) in einer gebogenen Ausführung ausgebildet ist, die die Aufnahme eines Winkelversatzes von bis zu 10°, vorzugsweise bis zu 5°, zwischen den durch das Kardangelenk (28) koppelbaren Wellen ermöglicht.

**7.** Schutzvorrichtung nach Anspruch 6, **dadurch gekennzeichnet, dass** die Mantelung (34) aus einem elastisch verformbaren Material besteht, insbesondere aus Gummi, einem Gewebeschlauch oder einer Kombination dieser Materialien.

**8.** Schutzvorrichtung nach einem der vorhergehenden Ansprüche, **dadurch gekennzeichnet, dass** die Mantelung (34) im eingebrachten Zustand durch das elastische Material (22) in einer definierten Lage relativ zum Kardangelenk (28) gehalten ist.

**9.** Anordnung mit einer Schutzvorrichtung nach einem der Ansprüche 1 bis 8 und einem Kardangelenk (28), wobei das Kardangelenk (28) mit einem ersten Ende mit einer Antriebswelle (16) und mit einem gegenüberliegenden zweiten Ende mit einer Förderschneckenwelle (14) zur Drehmomentübertragung gekoppelt ist.

**10.** Anordnung nach Anspruch 9, **dadurch gekennzeichnet, dass** zwischen der Mantelung (34) und einem Antriebsflansch (20) ein Spalt vorgesehen ist, über den ein geringer Winkelversatz zwischen der Antriebswelle (16) und der Förderschneckenwelle (14) aufgenommen werden kann, wobei die aufnehmbare Winkelabweichung von der Breite des Spalts abhängt.

**11.** Schutzvorrichtung für ein Kardangelenk (28) mit einer Mantelung (34), wobei das Kardangelenk (28) eine erste Gabel (30.1) und eine zweite Gabel (30.2) umfasst, die über ein Kreuzstück (32) gelenkig verbunden sind, **dadurch gekennzeichnet, dass** das Kardangelenk (28) vollständig von der Mantelung (34) umgeben ist und der zwischen der Innenwand der Mantelung (34) und der Außenkontur des Kardangelenks (28) vorhandene Raum vollständig mit elastischem Material (22) ausgefüllt ist, das das Kardangelenk (28) vollständig umschließt.

**Fig. 1**

10

16

28

12

14

**Fig. 2**

Fig. 4

14

16

28

12

**Fig. 3**

36

16

20

22

24

28

26

34

14

12

10

**Fig. 4**

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 539 279 A (RIDER ALLISON L ET AL) 10. November 1970 (1970-11-10) | 1,5,7-9, 11 | INV. F16D3/38 |
| Y | * Spalte 2, Zeile 12 - Spalte 4, Zeile 20; | 2,4,6 | F16D3/84 |
| A | Abbildungen 1-3 * | 3,10 | |
| | ----- | | |
| Y | GB 709 117 A (MOLLART ENGINEERING COMPANY LT) 19. Mai 1954 (1954-05-19) * Seite 2, Zeile 3 - Seite 2, Zeile 119; Abbildungen 1-5 * | 2,4 | |
| | ----- | | |
| Y | US 4 237 704 A (VARADAN RAJAN [US]) 9. Dezember 1980 (1980-12-09) * Spalte 2, Zeile 47 - Spalte 7, Zeile 2 * | 6 | |
| | ----- | | |
| A | CN 216 895 447 U (HANGZHOU JINGTONG AUTO PARTS CO LTD) 5. Juli 2022 (2022-07-05) * Absatz [0020]; Abbildung 1 * | 1 | |
| | ----- | | |
| A | DE 17 50 129 A1 (DEERE & CO) 11. März 1971 (1971-03-11) * das ganze Dokument * | 1 | |
| | ----- | | |

RECHERCHIERTE SACHGEBIETE (IPC)

F16D

Der vorliegende Recherchenbericht wurde für alle Patentansprüche erstellt

| Recherchenort | Abschlußdatum der Recherche | Prüfer |
|---|---|---|
| München | 19. Mai 2026 | Arboreanu, Antoniu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 22 7121

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2026

| Im Recherchenbericht angeführtes Patentdokument | Datum der Veröffentlichung | Mitglied(er) der Patentfamilie | Datum der Veröffentlichung |
|---|---|---|---|
| US 3539279 A | 10-11-1970 | KEINE | |
| GB 709117 A | 19-05-1954 | KEINE | |
| US 4237704 A | 09-12-1980 | KEINE | |
| CN 216895447 U | 05-07-2022 | KEINE | |
| DE 1750129 A1 | 11-03-1971 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017101929 U1
- DE 1575978 C
- DE 1750129 A
- DE 3248255 A1
- DE 201823 A5
- DE 1675224 B2